# EUROPÄISCHE PATENTSCHRIFT

(11) **EP 2 405 561 B1**
(45) Veröffentlichungstag und Bekanntmachung des Hinweises auf die Patenterteilung: **06.05.2015**
(21) Anmeldenummer: 11172495.1
(22) Anmeldetag: 04.07.2011
(51) Int. Cl.: H02K 9/06, H02K 5/20, H02K 11/00

(54) **Elektrische Maschine**
Electric machine
Machine électrique

(30) Priorität: 05.07.2010 DE 102010030949; 09.11.2010 DE 102010043629
(43) Veröffentlichungstag der Anmeldung: 11.01.2012
(73) Patentinhaber: Hanning Elektro-Werke GmbH & Co. KG, 33813 Oerlinghausen (DE)
(72) Erfinder: Henke, Thomas, 33829 Borgholzhausen (DE); Rosenau, Stefan, 32760 Detmold (DE); Teubner, Hans, 33813 Oerlinghausen (DE); Hangmann, Werner, 33758 Schloß Holte-Stukenbrock (DE)
(74) Vertreter: Ostermann, Thomas

(56) Entgegenhaltungen:
- EP-A1- 1 621 773
- GB-A- 2 423 420
- JP-A- 2005 094 949
- US-A1- 2007 273 220
- US-A1- 2009 289 513
- US-A1- 2011 278 970

## Beschreibung

Die Erfindung betrifft eine elektrische Maschine nach dem Oberbegriff des Patentanspruchs 1.

Aus der DE 20 2008 015 895 U1 ist ein durchzugsbelüfteteter Elektromotor bekannt, bei dem ein Motorgehäuse im Bereich von gegenüberliegenden Stirnseiten Öffnungen aufweist, so dass mittels eines Lüfters ein axialer Luftstrom durch das Motorgehäuse zur Kühlung eines Stators und/oder Rotors hindurchgeleitet werden kann. Befinden sich innerhalb des Motorgehäuses elektrische Bauelemente, können Maßnahmen vorgesehen sein, diese zusätzlich zu kühlen.

Aus der EP 0 724 324 B1 ist ein Elektromotor bekannt, der zum einen in einen Stator und einen Rotor aufweisendes Motorgehäuse und zum anderen ein an demselben angesetztes Elektronikgehäuse aufweist, in dem elektronische Bauteile (Ansteuereinrichtung) zur Ansteuerung des Elektromotors angeordnet sind. An einer Stirnseite des Motorgehäuses ist ein Lüfter angeordnet, der durch eine Lüfterhaube abgedeckt ist. Mittels der Lüfterhaube kann ein Luftstrom aus der Umgebung über das Motorgehäuse geführt werden zur Kühlung desselben. Damit auch die elektronischen Bauteile gekühlt werden können, weist ein Außenring der Lüfterhaube eine radiale Öffnung auf, so dass ein Teil des angesaugten Luftstroms in radialer Richtung nach außen zu Kühlrippen des Elektronikgehäuses geleitet werden kann. Nachteilig an dem bekannten Elektromotor ist, dass zur Kühlung des Elektronikgehäuses ein Teil des für die Kühlung des Motorgehäuses vorgesehener Luftstrom abgezweigt werden muss, der somit nicht mehr zur Kühlung des Motorgehäuses genutzt werden kann.

Aus der DE 101 47 472 A1 ist ein Antrieb mit einem Elektromotor und einer Stromrichteranordnung bekannt, bei dem Komponenten der Stromrichteranordnung baulich voneinander getrennt sind. Zum einen wird eine Baueinheit gebildet aus einer Gleichrichtereinheit, einer Zwischenkreiseinheit und einer Wechselrichtereinheit. Zum anderen wird eine Baueinheit gebildet aus einer Steuerelektronikeinheit, die mit dem Elektromotor baulich vereinigt sein kann. Durch die räumlich getrennte Anordnung der Gleichrichtereinheit, der Zwischenkreiseinheit und der Wechselrichtereinheit auf der einen Seite und der Steuerelektronikeinheit auf der anderen Seite kann zwar eine thermische Entkopplung herbeigeführt werden, wobei die Steuerelektronikeinheit nicht mehr durch die Wärmestrahlung bzw. Wärmeleitung der Leistungshalbleiter der Gleichrichtereinheit und der Wechselrichtereinheit nachteilig beeinflusst wird. Auch kann die Stromrichteranordnung bei sehr hohen Umgebungstemperaturen betrieben werden, da sich neben dem Elektromotor nur die Steuerelektronikeinheit in der Nähe des Garraumes befinden kann. Nachteilig an dem bekannten Antrieb ist allerdings, dass die Flexibilität des Antriebs eingeschränkt ist. Die Leistungshalbleiter der Stromrichteranordnung sind zum Betrieb an bestimmte vorgegebenen Netzspannungen und - frequenzen, beispielsweise auf 100 V, 240 V, 360 V oder 480 V bzw. 50 Hz oder 60 Hz, ausgelegt. Bei Einsatz des Dampfgargerätes beispielsweise in den Vereinigten Staaten von Amerika und in Deutschland müsste somit quasi die gesamte Stromrichteranordnung unter Einschluss der Gleichrichtereinheit, der Zwischenkreiseinheit und der Wechselrichtereinheit ausgetauscht werden.

Aus der DE 200 23 570 U1 ist ein Antrieb für ein Gargerät bekannt, der eine Gleichrichtereinheit, eine Zwischenkreiseinheit, eine Wechselrichtereinheit uund eine Steuerelektronikeinheit aufweist zur Ansteuerung eines Elektromotors. Die Konfiguration der Gleichrichtereinheit einerseits und der Wechselrichtereinheit andererseits erfolgt durch die Steuerelektronikeinheit. Eine von der Wechselrichtereinstellung unabhängige Einstellung des Gleichrichters ist nicht vorgesehen.

Aus der DE 10 2005 032 965 A1 ist ein Stromrichter gespeister Elektromotor bekannt, bei dem eine Wechselrichtereinheit und eine Steuerelektronikeinheit stirnseitig an einem Motorgehäuse angeordnet sind. Hierdurch wird ein kompakter Aufbau eines Stromrichtermotors geschaffen.

Aus der DE 102 15 822 A1 ist ein Antrieb bekannt, der eine Gleichrichtereinheit, eine Zwischenkreiseinheit, eine Wechselrichtereinheit sowie einen Elektromotor umfasst. Der Gleichrichter bildet zusammen mit elektrischen Bauelementen, wie beispielsweise einem elektronischen Leistungsschalter eine Versorgungseinheit, mittels derer im generatorischen Betrieb der von dem Motor abgegebenen elektrische Strom in einer Puffereinheit zwischengespeichert werden kann. Die Versorgungseinheit dient somit lediglich zur Steuerung einer Zwischenspeicherung von Energie, die im generatorischen Betrieb des Motors erzeugt wird.

Aus der GB 2 423 420 A ist eine elektrische Maschine mit radial verlaufenden Luftleitelementen bekannt, die einen Luftstrom von dem in der Maschine integrierten Lüfter zu einem außen angeordneten Elektronikgehäuse führen.

Aus der US 2009/0289513 A1 ist eine elektrische Maschine bekannt, in der eine Verteilkammer integriert ist, in der ein Teil des von außen in das Lüftergehäuse eintretende Luftstroms in Richtung eines Elektronikgehäuses und einen anderen Teil in Richtung eines Motorträgers aufteilt wird.

Aus der US 2007/273220 A1 ist eine elektrische Maschine bekannt, bei der ein Luftstrom auf einer dem Lüfter zugeordneten Stirnseite eines Motorgehäuses in denselben eintritt. Das Gehäuse wird in diesem Bereich durch eine ringförmige Abschlussplatte gebildet, die in einem Abstand zu einem gleich geformten Endabschnitt eines Motorträgers ausgebildet ist, so dass ein Umlenkkanal gebildet ist, der den eintretenden Luftstrom radial nach außen und dann in axialer Richtung umlenkt. Der Luftstrom überstreicht den Motorträger außenseitig, so dass ein Rotor und ein Stator der Maschine lediglich von außen gekühlt werden kann. Ein Elektronikgehäuse ist beabstandet zu dem Motorträger angeordnet, so dass der Luftstrom durch einen zwischen dem Elektronikgehäuse und dem Motorträger gebildeten Spalt in axialer Richtung strömen kann, wobei zusätzlich das Elektronikgehäuse gekühlt wird. Hierdurch wird zwar eine direkte Kühlung des Elektronikgehäuses ermöglicht. Da der Luftstrom jedoch außerhalb des Motorträgers verläuft, ist die Kühlwirkung bezüglich des Stators und des Rotors beschränkt.

Aus der JP 2005 094949 A1 ist eine elektrische Maschine mit einem Motorträger zur Aufnahme eines Stators und eines Rotors bekannt. An einer Stirnseite des Motorträgers ist ein Lüfter angeordnet, mittels dessen ein Luftstrom angesaugt wird, der durch den Motorträger zur Kühlung des Rotors bzw. Stators geleitet wird. An einer dem Lüfter zugeordneten Stirnwand des Motorträgers ist eine axiale Öffnung vorgesehen, durch die der durch den Motorträger hindurchgeleitete Luftstrom hindurchtreten kann, um dann mittels des Lüfters in Richtung eines an den Motorträger anschließenden Elektronikgehäuses umgelenkt zu werden. Der Lüfter ist durch einen hohlzylinderförmigen Kranz des Motorträgers umgeben, so dass der Luftstrom im Wesentlichen in axialer Richtung nach außen strömt. Damit der Luftstrom zur Kühlung des Elektronikgehäuses genutzt werden kann, weist dieses eine Mehrzahl von Kühlrippen auf, die durch Schlitze des Kranzes in den Motorträger hinragen. Die Kühlrippen können somit teilweise von dem kühlenden Luftstrom überstrichen werden können. Nachteilig an der bekannten Maschine ist, dass das Elektronikgehäuse nur mittelbar über freie Enden der Kühlrippen durch den Luftstrom gekühlt werden kann.

Aufgabe der vorliegenden Erfindung ist es, eine elektrische Maschine mit einem Motorträger und einem benachbarten Elektronikgehäuse derart weiterzubilden, dass auf effiziente Weise eine Belüftung sowohl des Motorträgers als auch des Elektronikgehäuses gewährleistet ist.

Zur Lösung der Aufgabe weist die Erfindung die Merkmale des Patentanspruchs 1 auf.

Der besondere Vorteil der Erfindung besteht darin, dass ein Luftstrom zur Kühlung sowohl eines Motorträgers als auch eines benachbart angeordneten Elektronikgehäuses genutzt werden kann. Ein an einer Stirnseite des Motorträgers angeordnete Lüfter wird dazu genutzt, den an einer Stirnwand des Motorträgers durch axiale Öffnungen austretenden Luftstrom in vorzugsweise radialer Richtung umzulenken in Richtung des Elektronikgehäuses. Dem Lüfter kömmt somit eine Doppelfunktion zu. Zum einen dient er zum Ansaugen eines Luftstromes, der im Wesentlichen in axialer Richtung durch den Motor geleitet wird. Zum anderen dient er als Luftführungsmittel zur Umlenkung des axialen Luftstroms in radialer Richtung zu dem Elektronikgehäuse. Vorteilhaft kann ein wesentlicher Teil des für die Innenbelüftung des Motorgs vorgesehenen Luftstroms auch zur Belüftung bzw. Kühlung des Elektronikgehäuses genutzt werden. Vorteilhaft kann eine effiziente und platzsparende Kühlung von außerhalb des Motors angeordneten elektrischen Bauteilen, beispielsweise einen Frequenzumrichter, gewährleistet sein. Nach der Erfindung schließt sich an einer Stirnwand des Motorträgers ein den Lüfter teilweise umgebender Kranz an, mittels dessen der Luftstrom zumindest teilweise umgelenkt wird in Richtung von in einer Erstreckungsebene des Lüfters angeordneten Kühlrippen des Elektronikgehäuses. Der Kranz bewirkt eine Kanalisierung des Luftstroms in Richtung der Kühlrippen des Elektronikgehäuses, wobei die sternförmig auseinander laufenden Luftstromzweige gesammelt werden. Vorteilhaft kann dem Elektronikgehäuse ein Luftstrom hoher Strömungsdichte bereitgestellt werden. Nach der Erfindung ist der Kranz ringausschnittförmig in einem überstumpfen Winkelbereich erstreckend angeordnet, wobei freie Enden des Kranzes parallel zueinander verlaufende Kühlrippen des Elektronikgehäuses begrenzen. Vorteilhaft kann hierdurch eine ringförmige Sammlung des Luftstroms in eine vorgegebene Vorzugsrichtung entlang des Kranzes hin zu den Kühlrippen erfolgen.

Nach einer bevorzugten Ausführungsform der Erfindung weist der Lüfter ein Lüfterrad mit einer Mehrzahl von Lüfterschaufeln sowie eine Lüfterscheibe auf. Die Lüfterscheibe dient in Verbindung mit einer gegenüberliegenden Stirnwand des Motorträgers als Wandung für einen Luftkanal, durch den der Luftstrom im Wesentlichen in radialer Richtung bzw. in Querrichtung nach außen geführt ist.

Innerhalb des Luftkanals strömt der Luftstrom in radialer Richtung von innen nach außen, da die axiale Öffnung der Stirnwand in einem achsnahen Bereich angeordnet ist. Vorzugsweise ist die axiale Öffnung durch eine Mehrzahl von ringförmig oder kreisförmig angeordneten Durchbrechungen ausgebildet.

Nach einer Weiterbildung der Erfindung ist der Kranz einstückig mit der Stirnwand des Motorträgers verbunden zur Bildung eines glockenförmigen A-Lagerschildes des Motorträgers. Vorteilhaft kann somit der Materialaufwand sowie der Platzbedarf für die Ausbildung des Luftkanals gering gehalten werden.

Nach einer Weiterbildung der Erfindung ist die Lüfterscheibe des Lüfters massiv ausgebildet, so dass sie eine durchgehende Wand für den radialen Luftkanal bildet.

Nach einer Weiterbildung der Erfindung gemäß Anspruch 10 bildet der Elektromotor zusammen mit einer in dem Elektronikgehäuse integrierten Wechselrichtereinheit und Steuerelektronikeinheit eine gemeinsame Baueinheit, die räumlich getrennt zu einer die Gleichrichtereinheit und den Zwischenkreis aufweisenden Strombereitstellungseinheit angeordnet ist.

Vorteilhaft wird hierdurch ein Antrieb mit einem Elektromotor und einer Stromrichteranordnung geschaffen, so dass der Aufwand für den universellen Einsatz des Antriebs an unterschiedliche (Netz-)Einspeisungen verbessert wird. Insbesondere wird die Flexibilität des Antriebs hinsichtlich der Einsatzart vergrößert. Es ist eine funktionelle und räumliche Auftrennung einer Stromrichteranordnung vorgesehen, wobei eine Gleichrichtereinheit und eine Zwischenkreiseinheit im Wesentlichen eine Strombereitstellungseinheit bilden, die räumlich getrennt zu weiteren Bestandteilen der Stromrichteranordnung bzw. zum Motor angeordnet ist. Es kann die Strombereitstellungseinheit an die elektrischen Einspeisebedingungen angepasst sein. Die elektrischen Einspeisebedingungen können beispielsweise die Höhe der Einspeisespannung und/oder der Einspeisefrequenz betreffen sowie die gesetzlichen Vorgaben hinsichtlich der elektromagnetischen Verträglichkeit. Die Wechselrichtereinheit bildet zusammen mit dem Elektromotor und der Steuerelektronikeinheit eine kompakte Baueinheit, die unabhängig von den Einspeisebedingungen stets die gleiche Konfiguration aufweist.

Nach einer bevorzugten Ausführungsform der Erfindung gemäß Anspruch 12 ist die Strombereitstellungseinheit an eine eingangsseitige Netzspannung und/oder Netzfrequenz angepasst ausgebildet. Während der Aufbau der Wechselrichtereinheit unverändert bleibt, werden die Komponenten der Strombereitstellungseinheit an die jeweiligen Einspeisebedingungen/Netzbedingungen angepasst. Für unterschiedliche Netze können somit unterschiedliche Strombereitstellungseinheiten mit auf die Netzbedingungen angepassten Bauelementen (Leistungshalbleiter) eingesetzt werden. Für unterschiedliche Netze können somit wahlweise unterschiedliche Strombereitstellungseinheiten mit der Wechselrichtereinheit und der Steuerelektronikeinheit kombiniert werden.

Nach einer Weiterbildung der Erfindung gemäß Anspruch 13 ist die Strombereitstellungseinheit derart ausgebildet, dass an einem Ausgang derselben eine Zwischenkreisspannung mit einem konstanten Spannungsniveau erzeugbar ist. Durch die Bereitstellung eines konstanten Spannungsniveaus kann die dem Elektromotor zugeordnete Wechselrichtereinheit bei unterschiedlichen Einspeisebedingungen unverändert bleiben. Die Höhe der Zwischenkreisspannung ist an die Motorauslegung angepasst, so dass für unterschiedliche Netze stets der gleiche Elektromotor bzw. Wechselrichtereinheit eingesetzt werden kann.

Nach einer Weiterbildung der Erfindung weist gemäß Anspruch 14 die Strombereitstellungseinheit einen solchen Netzfilter auf, dass die Anforderungen hinsichtlich der elektromagnetischen Verträglichkeit erfüllt werden. In Abhängigkeit von den Einspeisebedingungen, zu denen gesetzliche Vorgaben hinsichtlich der elektromagnetischen Verträglichkeit gehören, kann somit für unterschiedliche Netze ein unterschiedlicher Netzfilter eingesetzt werden. Der Filteraufwand kann dadurch reduziert werden.

Nach einer Weiterbildung der Erfindung gemäß Anspruch 15 weist die Strombereitstellungseinheit eine Wandlereinheit auf, mittels derer am Ausgang der Strombereitstellungseinheit eine Zwischenkreisspannung mit einem konstanten Spannungsniveau erzeugbar ist. Das konstante Spannungsniveau kann beispielsweise in einem Bereich von 300 V ± 20 V liegen. Vorteilhaft können hierdurch die Wechselrichtereinheit und der Elektromotor für unterschiedliche Netze im Bereich zwischen 100 V und 480 V eingesetzt werden.

Nach einer Weiterbildung der Erfindung gemäß Anspruch 16 ist die Strombereitstellungseinheit in einem solchen Abstand zu der Baueinheit und/oder zu einem Garraum des Dampfgargerätes angeordnet, dass die Betriebstemperatur der Strombereitstellungseinheit unterhalb eines vorgegebenen Schwellwertes liegt. Die Größe des Schwellwertes kann beispielsweise ein Temperaturwert von 90° C sein. Vorteilhaft kann hierdurch der Kühlungsaufwand verringert und ein langzeitstabiler Einsatz des Antriebs ermöglicht werden. Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Vorderansicht eines Elektromotors mit einem Motorträger und einem unterhalb desselben anschließenden Elektronikgehäuses,
- Figur 2: eine perspektivische Rückansicht des Elektromotors,
- Figur 3: einen Längsschnitt durch den Elektromotor und
- Figur 4: ein Blockschaltbild eines erfindungsgemäßen Antriebs nach einer alternativen Ausführungsform.

Eine elektrische Maschine nach der Erfindung kann beispielsweise als durchzugsbelüfteter Elektromotor 1, vorzugsweise als elektronisch kommutierter Synchronmotor ausgebildet sein, der beispielsweise für den Antrieb von Gargeräten eingesetzt werden kann. Der Elektromotor 1 umfasst zum einen einen Motorträger 2, in dem ein Stator 3 und ein drehfest mit einer Antriebswelle 4 verbundener Rotor 5 angeordnet sind.

Der Motorträger 2 weist an einer Antriebsseite ein A-Lagerschild 6 und an einer gegenüberliegenden Nichtantriebsseite ein B-Lagerschild 7 auf, wobei das A-Lagerschild 6 einen größeren Durchmesser aufweist als das B-Lagerschild 7. Das A-Lagerschild 6 und das B-Lagerschild 7 können beispielsweise an einer Mantelfläche des Motorträgers 2 angeflanscht sein. Sie sind jeweils über Lager 8 gegenüber der Antriebswelle 4 abgestützt. In einem Ringbereich zwischen dem A-Lagerschild 6 und dem B-Lagerschild 7 erstreckt sich der Stator 3. Das A-Lagerschild 6 und das B-Lagerschild 7 sind jeweils direkt an den Stator 3 angeflanscht.

Nach einer nicht dargestellten alternativen Ausführungsform der Erfindung ist der Stator 3 von einem rohrförmigen Gehäusekörper umgeben bzw. der Stator 3 ist in dem rohrförmigen Gehäusekörper eingepresst. Der rohrförmige Gehäusekörper dient als Motorträger und ist mit dem A-Lagerschild 6 und dem B-Lagerschild 7 verbunden. Alternativ kann der vorzugsweise mit radial abstehenden Kühlrippen versehene rohrförmige Gehäusekörper auch auf dem Stator 3 aufgeschrumpft oder durch Druckgießen formschlüssig auf den Stator 3 aufgebracht sein.

Zum anderen weist der Elektromotor 1 ein sich unmittelbar an einem Umfangsrand des Motorträgers 2 anschließendes Elektronikgehäuse 9 auf, in dem elektrische Bauteile, wie Leistungshalbleiter oder dergleichen zur Bildung eines Frequenzumrichters angeordnet sind. Der Frequenzumrichter dient zur Ansteuerung des Elektromotors 1. Gegebenenfalls kann das Elektronikgehäuse 9 auch durch einen Fortsatzabschnitt des A-Lagerschildes 6 gebildet sein, wobei die elektronischen Bauteile auf einer Leiterplatte angeordnet an einem vorgesehenen Platz innerhalb des Fortsatzabschnittes positioniert sind.

Das B-Lagerschild 7 weist als axiale Öffnung eine Mehrzahl von ringförmig angeordneten Durchbrechungen 10 auf, die einen Lufteinlass für einen sich in axialer Richtung ausbildenden Luftstrom 11 innerhalb des Motorträgers 2 bilden. Die Durchbrechungen 10 sind jeweils in einem achsfernen oder achsnahen Bereich einer senkrecht zur Antriebswelle 4 verlaufenden Stirnwand 12 des B-Lagerschildes 7 angeordnet.

Das A-Lagerschild 6 weist an einer senkrecht zur Antriebswelle 4 verlaufenden Stirnwand 13 desselben als axiale Öffnung eine Mehrzahl von ringförmig verteilt angeordneten Durchbrechungen 14 auf, die einen Luftauslass des Motorträgers 2 bilden. Die Durchbrechungen 14 sind in einem achsnahen Bereich der Stirnwand 13 angeordnet.

In axialer Richtung benachbart zu der Stirnwand 13 des A-Lagerschildes 6 ist außerhalb des Motorträgers 2 ein Lüfter (Radiallüfter 15) angeordnet, der drehfest mit der Antriebswelle 4 verbunden ist. Der Lüfter 15 weist ein Lüfterrad mit einer Mehrzahl von Lüfterschaufeln 16 sowie eine massive Lüfterscheibe 17 auf. Die Lüfterschaufeln 16 erstrecken sich in radialer Richtung auf einer der Stirnwand 6 zugewandten Seite der Lüfterscheibe 17 und sind mit dieser einstückig verbunden. Vorzugsweise ist die Lüfterscheibe 17 einstückig mit den Lüfterschaufeln 16 verbunden. Gegebenenfalls kann die Lüfterscheibe 17 auch Öffnungen aufweisen.

In einer Erstreckungsebene E des Lüfters 15 schließt sich an einem Umfangsrand des A-Lagerschildes 6, im vorliegenden Fall unterhalb des A-Lagerschildes 6, das Elektronikgehäuse 9 an, wobei eine Reihe von parallel zueinander angeordneten Kühlrippen 18 des Elektronikgehäuses 9 in der Erstreckungsebene E verlaufen.

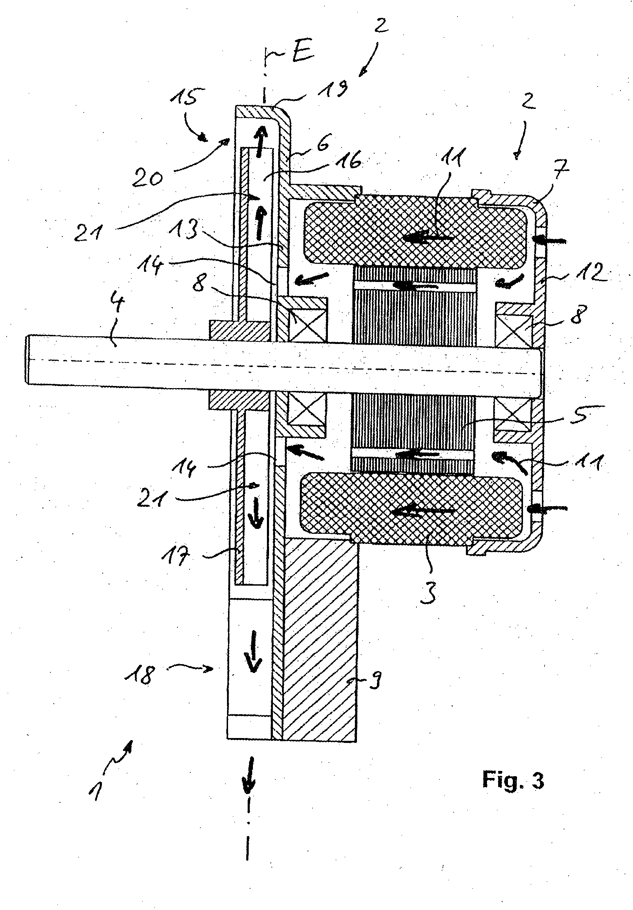

Das A-Lagerschild 6 ist glockenförmig ausgebildet und weist einen sich an einem Umfangsrand der Stirnwand 13 anschließenden Kranz 19 auf, der sich ringausschnittförmig bzw. kreisringausschnittförmig in einem überstumpfen Winkelbereich α in Umfangsrichtung erstreckt. Der Kranz 19 umgibt den Lüfter 15, wobei ein Innendurchmesser des Kranzes 19 größer ist als ein Außendurchmesser der Lüfterscheibe 17. Zwischen einer Axialfläche 19' des Kranzes 19 und einem Umfangsrand der Lüfterscheibe 17 bildet sich somit ein Ringspalt 20 zur Führung des Luftstromes 11 aus. Wie besser aus Figur 3 ersichtlich ist, bilden die parallel zueinander verlaufende Lüfterscheibe 17 und die Stirnwand 13 des A-Lagerschildes 6 Wandungen eines in der Erstreckungsebene E verlaufenden Luftkanals 21, in dem der durch die Durchbrechungen 14 der Stirnwand 13 aus dem Motorträger 2 austretender Luftstrom 11 umgelenkt wird von dem achsnahen Bereich in einen achsfernen Bereich. Der Luftstrom 11 kann eine radiale und/oder in Umfangsrichtung gerichtete Bewegungskomponente aufweisen und verlässt den Luftkanal 21 am Umfangsrand der Lüfterscheibe 17. Ein erster Teil des Luftstroms 11 wird in dem Ringspalt 20 gesammelt und entsprechend einer Vorzugsrichtung V ringförmig zu den Kühlrippen 18 geleitet. Ein zweiter Teil des Luftstroms 11 wird direkt an die Kühlrippen 18 übergeben, und zwar in einem Bereich, in dem der Kranz 19 offen ausgebildet ist, ohne das Vorsehen der Axialfläche 19'. Der erste Teil des Luftstroms 11 strömt in Umfangsrichtung bis zu einem offenen Bereich 22 des Kranzes 19, in dem sich die Kühlrippen 18 befinden.

Die Kühlung bzw. Belüftung des Elektromotors 1 erfolgt somit in zwei Schritten. In einem ersten Schritt wird mittels des Lüfters 15 der Luftstrom 11 aus der Umgebung angesaugt, wobei der Luftstrom 11 durch den Lufteinlass 10 in den Motorträger 2 eintritt und im Wesentlichen in axialer Richtung bis zu dem Luftauslass 14 an dem gegenüberliegenden A-Lagerschild 6 geleitet wird zur Kühlung des Stators 3 und/oder des Rotors 5. In einem zweiten Schritt wird derselbe Luftstrom 11 über den Luftkanal 21 und/oder den Ringspalt 20 quer zur Antriebswelle 4 umgeleitet in Richtung der Kühlrippen 18 des Elektronikgehäuses 9. Der Luftstrom 11 kann somit auch zur Kühlung von elektronischen Bauteilen des Elektronikgehäuses 9 genutzt werden. Anschließend wird der Luftstrom 11 an die Umgebung abgegeben.

Der erfindungsgemäße Elektromotor 1 kann beispielsweise für Heißluftöfen oder Pumpensysteme eingesetzt werden. Insbesondere kann der Elektromotor 1 für Gargeräte, beispielsweise Kombidämpfer, eingesetzt werden.

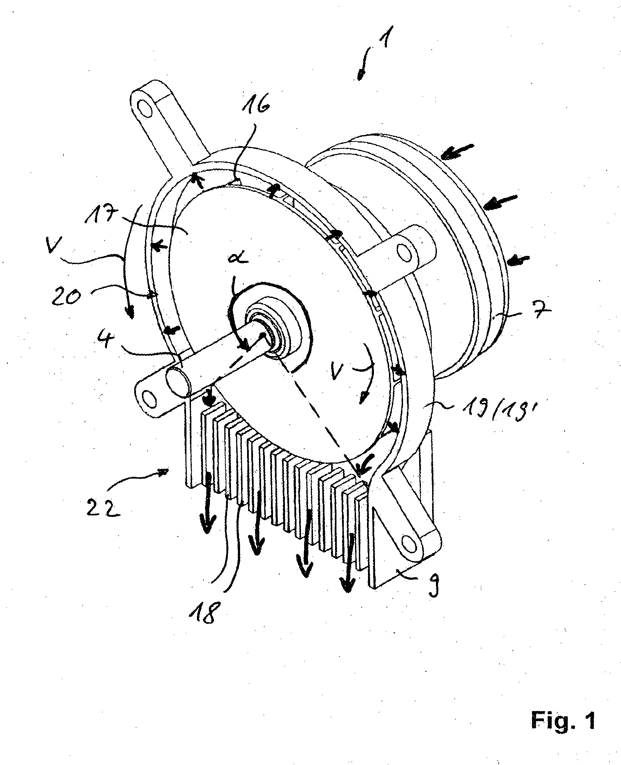

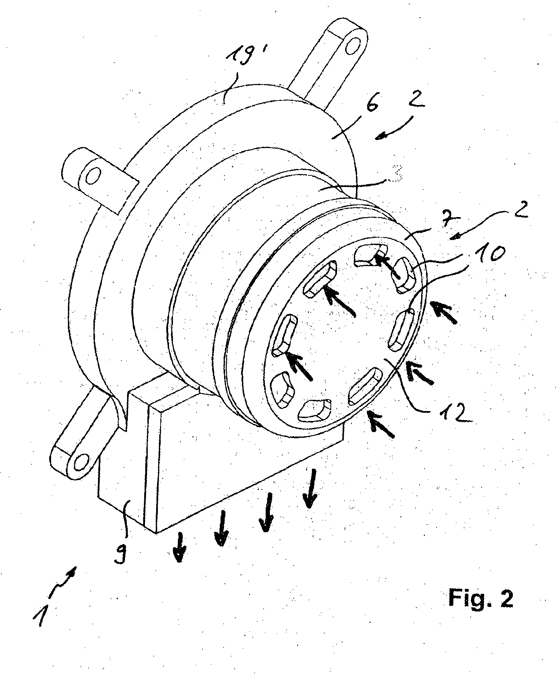

Nach der Ausführungsform der Erfindung gemäß den Figuren 1 bis 3 befinden sich die Wechselrichtereinheit, die Steuerelektronikeinheit, die Gleichrichtereinheit sowie die eine den Zwischenkreis aufweisende Strombereitstellungseinheit in dem Elektronikgehäuse 9.

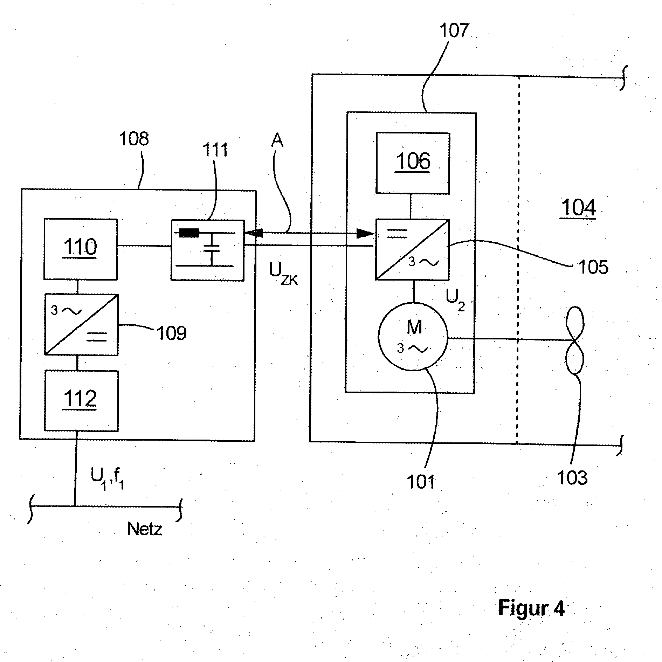

Nach einer weiteren Ausführungsform der Erfindung gemäß Figur 4 können eine Wechselrichtereinheit 105, eine Steuerelektronikeinheit 106 und ein Elektromotor 101 eine gemeinsame Baueinheit 107 bilden, die räumlich getrennt zu einer die Gleichrichtereinheit 109 und den Zwischenkreis 111 aufweisenden Strombereitstellungseinheit 108 angeordnet ist.

Der Elektromotor 101 ist als dreiphasiger Synchronmotor ausgebildet, der über eine Antriebswelle mit einem Gebläserad 103 zur Umwälzung von heißer Luft in einem Garraum 104 des Gargerätes gekoppelt ist. Das Gargerät kann als Dampfgargerät ausgebildet sein, wobei das Gebläserad 103 auch zur Dampferzeugung eingesetzt wird, indem Wasser auf die relativ heißen Schaufeln des Gebläserades 103 geleitet wird.

Der Elektromotor 101 bildet zusammen mit einer Wechselrichtereinheit 105 und einer Steuerelektronikeinheit 106 eine gemeinsame Baueinheit 107, die unmittelbar hinter oder neben dem Garraum 104 montiert ist. Die Steuerelektronikeinheit 106 kann beispielsweise eine Signalelektronik (Mikrorechner bzw. Mikrokontroller) aufweisen, mittels derer die Wechselrichtereinheit 105 und/oder der Elektromotor 101 angesteuert wird. Die Wechselrichtereinheit 105 kann eine Zwischenkreispufferung, eine Treiberschaltung, eine Wechselrichter-Leistungsendstufe aufweisen.

In einem Abstand A zu der Baueinheit 107 ist eine Strombereitstellungseinheit 108 angeordnet, die im Wesentlichen eine Gleichrichtereinheit 109, eine Wandlereinheit 110, eine Zwischenkreiseinheit 111 sowie eine Filtereinheit 112 umfasst. Die Strombereitstellungseinheit 108 ist auf einer dem Garraum 104 abgewandten Seite der Baueinheit 107 angeordnet, wobei der Abstand A vorzugsweise mindestens 0,5 m beträgt, damit die Betriebstemperatur der Strombereitstellungseinheit 108 unterhalb eines vorgegebenen Schwellwertes von beispielsweise 90° C gehalten werden kann. Sofern die zueinander gekehrte Gehäusewandung der Strombereitstellungseinheit 108 und/oder der Baueinheit 107 thermisch isoliert ausgebildet sind, kann der Abstand A auch kleiner gewählt sein und im Falle eines beschränkten Bauraumbedarfes insbesondere bei entsprechender thermischer Isolierung wenige Millimeter oder Null betragen. Für den Fall, dass der Abstand A Null beträgt, liegen die zueinander gerichteten Gehäusewandungen der Strombereitstellungseinheit 108 und der Baueinheit 107 unmittelbar aneinander.

Die Strombereitstellungseinheit 108 ist eingangsseitig mit einem Stromversorgungsnetz verbunden, das eine dreiphasige Netzspannung U₁ bei einer Frequenz f₁ bereitstellt. Beispielsweise kann die Netzspannung U₁ 230 V und die Netzfrequenz 50 Hz betragen. Alternativ kann die Strombereitstellungseinheit 108 auch an einer Batterie oder anderen Stromquellen angeschlossen sein.

Die Gleichrichtereinheit 109 weist vorzugsweise einen netzgeführten Gleichrichter und eine aktive Regelschaltung zur Leistungsfaktorkorrektur auf, der die eingangsseitige Netzspannung U₁ in eine Gleichspannung umwandelt. Der Gleichrichtereinheit 109 ist die Wandlereinheit 110 nachgeordnet, die beispielsweise einen Aufwärtswandler (Hochsetzsteller) und/oder einen Abwärtswandler (Tiefsetzsteller) aufweisen kann zur Erzeugung eines konstanten Spannungsniveaus U_{ZK} am Ausgang der Strombereitstellungseinheit 108. Der Zwischenkreis 111 weist mindestens eine Spule und einen Kondensator auf, so dass die eingespeiste elektrische Energie zwischengespeichert werden kann, und zwar unter Bereitstellung des konstanten Spannungsniveaus mit der Spannung U_{ZK}.

Die Filtereinheit 112 weist mindestens einen Netzfilter auf, der insbesondere die elektromagnetische Verträglichkeit des Dampfgargerätes gegen Störungen aus dem Stromnetz verbessert. Zusätzlich kann der Netzfilter auch so ausgelegt sein, dass eine elektrische Störung des öffentlichen Stromversorgungsnetzes durch das Dampfgargerät begrenzt wird.

Die Wechselrichtereinheit 105 weist einen auf die Motornennspannung U₂ ausgelegten Wechselrichter auf. Der Wechselrichter ist derart ausgelegt, dass er aus der Zwischenkreisspannung U_{ZK} die vorgegebene dreiphasige Motornennspannung U₂ erzeugen kann.

In Abhängigkeit von den Einspeisebedingungen des Gargerätes, insbesondere unterschiedlichen Stromnetzen wie beispielsweise 100 V - 230 V 50 Hz/60 Hz 1∼ oder 360 V - 480 V 50/60 Hz 3∼ erfolgt eine Umkonfiguration der Strombereitstellungseinheit 108 dahingehend, dass die Gleichrichtereinheit 109 und/oder die Wandlereinheit 110 auf die Einspeisebedingungen bzw. Einspeiseart angepasst ausgebildet sind. Die Auslegung der Filtereinheit 112 wird ebenfalls an die Einspeisebedingungen, insbesondere den gesetzlichen Vorgaben hinsichtlich der elektromagnetischen Verträglichkeit abgestimmt. Somit kann für unterschiedliche Anwendungen eine flexible Bereitstellung eines Antriebs ermöglicht werden, wobei die Baueinheit 107 stets die gleiche Konfiguration und in dem Dampfgargerät integriert angeordnet ist. Auch die Strombereitstellungseinheit 108 ist in einem Gehäuse des Dampfgargerätes integriert angeordnet; sie ist jedoch beabstandet zu dem Elektromotor 101 im Bereich eines Gehäuserandes angeordnet, so dass die Zugänglichkeit bzw. ein Austausch derselben vereinfacht wird.

Der erfindungsgemäße Antrieb kann für jegliche motorbetriebenen Geräte angewendet werden, wo zum einen eine hohe thermische Belastung im Motorbereich vorliegt und zum anderen eine relativ hohe Variantenvielfalt bezüglich der Stromeinspeisung und bezüglich Filteranforderungen besteht. Der erfindungsgemäße Antrieb kann beispielsweise für Pumpenantriebe im Haushaltsgerätebereich, beispielsweise für Geschirrspülgeräte eingesetzt werden. Darüber hinaus ist er einsetzbar in der Labortechnik, in der Medizintechnik oder im Industriebereich. Der erfindungsgemäße Antrieb ermöglicht eine verbesserte Modularität bei der Konfiguration von motorbetriebenen Geräten.

## Patentansprüche

1. Elektrische Maschine, insbesondere Elektromotor (1), mit einem Motorträger (2), mit einem Stator (3), mit einem Rotor (5) und mit einem stirnseitig angeordneten Lüfter (15) und mit einem sich an den Motorträger (2) anschließenden Elektronikgehäuse (9), in dem elektrische Bauteile angeordnet sind, wobei mittels des Lüfters (15) ein Luftstrom (11) ansaugbar ist, der zur Kühlung des Stators (3) und/oder des Rotors (5) in axialer Richtung durch den Motorträger (2) geleitet wird, wobei eine dem Lüfter (15) zugeordnete Stirnwand (13) des Motorträgers (2) eine axiale Öffnung (14) aufweist, durch die der Luftstrom (11) aus dem Motorträger (2) austritt und mittels des Lüfters (15) umgelenkt wird in Richtung des Elektronikgehäuses (9), **dadurch gekennzeichnet, dass** sich an die Stirnwand (13) des Motorträgers (2) ein den Lüfter (15) teilweise umgebender Kranz (19) anschließt, mittels dessen der Luftstrom (11) zumindest teilweise umgelenkt wird in Richtung von in einer Erstreckungsebene (E) des Lüfters (15) angeordneten Kühlrippen (18) des Elektronikgehäuses (9), wobei der Kranz (19) ringausschnittförmig einen überstumpfen Winkelbereich (α)überstreicht.

2. Elektrische Maschine nach Anspruch 1, **dadurch gekennzeichnet, dass** der Lüfter (15) ein Lüfterrad mit einer Mehrzahl von Lüfterschaufeln (16) und eine Lüfterscheibe (17) aufweist, von der auf einer der Stirnwand (13) zugewandten Seite die Lüfterschaufeln (16) abragen, derart, dass ein Luftkanal (21) gebildet ist zur Führung des Luftstroms (11) in einer radialen Ebene (E) nach außen.

3. Elektrische Maschine nach Anspruch 1 oder 2, **dadurch gekennzeichnet, dass** die axiale Öffnung (14) der Stirnwand (13) in einem achsnahen Bereich angeordnet ist.

4. Elektrische Maschine nach einem der Ansprüche 1 bis 3, **dadurch gekennzeichnet, dass** freie Enden des Kranzes (19) die parallel zueinander verlaufenden Kühlrippen (18) des Elektronikgehäuses (9) begrenzen.

5. Elektrische Maschine nach einem der Ansprüche 1 bis 4, **dadurch gekennzeichnet, dass** der Kranz (19) einstückig mit der Stirnwand (13) verbunden ist zur Bildung eines glockenförmigen A-Lagerschildes (6).

6. Elektrische Maschine nach einem der Ansprüche 1 bis 5, **dadurch gekennzeichnet, dass** der Motorträger (2) ein B-Lagerschild (7) mit mindestens einer axialen Öffnung (10) für den Lufteinlass aufweist zur Bildung eines axialen Luftstroms (11) zwischen dem B-Lagerschild (7) und dem A-Lagerschild (6).

7. Elektrische Maschine nach einem der Ansprüche 1 bis 6, **dadurch gekennzeichnet, dass** die Lüfterscheibe (17) drehfest mit einer Antriebswelle (4) verbunden ist und dass die Lüfterscheibe (17) massiv ausgebildet ist zur Erzeugung eines den Luftstrom (11) ansaugenden Unterdrucks.

8. Elektrische Maschine nach einem der Ansprüche 1 bis 7, **dadurch gekennzeichnet, dass** der Kranz (19) kreisringförmig ausgebildet ist mit einem solchen Radius, dass zwischen dem Lüfter (15) und dem Kranz (19) ein Ringspalt (20) gebildet ist zur Führung des Luftstroms (11) in Umfangsrichtung bis in einem durch die Kühlrippen (18) ausgefüllten offenen Bereich (22) des Kranzes (19).

9. Elektrische Maschine nach einem der Ansprüche 1 bis 8, **dadurch gekennzeichnet, dass** dem Elektromotor (101) eine Stromrichteranordnung zugeordnet ist, die eine Gleichrichtereinheit (109), eine Zwischenkreiseinheit (111), eine Wechselrichterinheit (105) und eine Steuerelektronikeinheit (106) aufweist, wobei die Wechselrichtereinheit (105), die Steuerelektronikeinheit (106) und der Elektromotor (101) eine gemeinsame Baueinheit (107) bilden, die räumlich getrennt zu einer die Gleichrichtereinheit (109) und den Zwischenkreis (111) aufweisenden Strombereitstellungseinheit (108) angeordnet ist.

10. Elektrische Maschine nach einem der Ansprüche 1 bis 9, **dadurch gekennzeichnet, dass** die Strombereitstellungseinheit (108) in Abhängigkeit von den Einspeisebedingungen angepasst ausgebildet ist und dass die Baueinheit (107) unabhängig von den Einspeisebedingungen stets die gleiche Konfiguration aufweist.

11. Elektrische Maschine nach einem der Ansprüche 1 bis 10, **dadurch gekennzeichnet, dass** die Strombereitstellungseinheit (108) eine an die Netzspannung (U₁) und Netzfrequenz (f₁) angepasste Schaltung aufweist.

12. Elektrische Maschine nach einem der Ansprüche 1 bis 11 **dadurch gekennzeichnet, dass** die Strombereitstellungseinheit (108) derart ausgebildet ist, dass an einem Ausgang derselben eine Zwischenkreisspannung (U_{ZK}) mit einem an die Auslegung des Elektromotors (101) und/oder der Wechselrichtereinheit (105) angepasstes konstantes Spannungsniveau (U_{ZK}) erzeugbar ist.

13. Elektrische Maschine nach einem der Ansprüche 1 bis 11, **dadurch gekennzeichnet, dass** die Strombereitstellungseinheit (108) eine solche Filtereinheit (112) aufweist, derart, dass die Anforderungen hinsichtlich der elektromagnetischen Verträglichkeit in Abhängigkeit von den Einspeisebedingungen erfüllt werden.

14. Elektrische Maschine nach einem der Ansprüche 1 bis 13, **dadurch gekennzeichnet, dass** die Strombereitstellungseinheit (108) eine Wandlereinheit (110) aufweist, derart, dass an dem Ausgang der Strombereitstellungseinheit (108) eine Zwischenkreisspannung (U_{ZK}) mit einem konstanten Spannungsniveau erzeugbar ist.

15. Elektrische Maschine nach einem der Ansprüche 1 bis 14, **dadurch gekennzeichnet, dass** die Strombereitstellungseinheit (108) in einem solchen Abstand (A) zu der Baueinheit (107) und/oder zu einem Garraum (104) eines Dampfgargerätes angeordnet ist, dass die Betriebstemperatur der Strombereitstellungseinheit (108) unterhalb eines vorgegebenen Schwellwertes liegt.

16. Elektrische Maschine nach einem der Ansprüche 1 bis 15, **dadurch gekennzeichnet, dass** die Wechselrichtereinheit (105) einen Wechselrichter umfasst, der auf die Motornennspannung (U₂) des Elektromotors (1) ausgelegt ist.

17. Elektrische Antrieb nach einem der Ansprüche 1 bis 16, **dadurch gekennzeichnet, dass** der Elektromotor (1) als ein dreiphasiger Synchronmotor ausgebildet ist.

18. Elektrische Maschine nach einem der Ansprüche 1 bis 17, **dadurch gekennzeichnet**, das der Abstand (A) zwischen der Strombereitstellungseinheit (108) und der Baueinheit (107) Null beträgt.

## Claims

1. An electric machine, in particular an electric motor (1), including a motor support (2), a stator (3), a rotor (5), and a fan (15) arranged on the front side, and an electronics housing (9) which adjoins the motor support (2) and in which electrical components are arranged, wherein a stream of air (11) can be sucked in by means of the fan (15) and is passed through the motor support (2) in an axial direction in order to cool the stator (3) and/or the rotor (5), wherein a front wall (13) of the motor support (2), which wall is associated with the fan (15), has an axial opening (14) through which the stream of air (11) exits from the motor support (2) and is diverted towards the electronics housing (9) by means of the fan (15), **characterized in that** a rim (19) adjoins the front wall (13) of the motor support (2), which rim partly surrounds the fan (15) and serves to divert at least part of the stream of air (11) towards cooling ribs (18) of the electronics housing (9), which ribs are arranged in a plane of extension (E) of the fan (15), wherein the rim (19) has the shape of a ring sector and extends over a reflex angle area (α).

2. The electric machine according to claim 1, **characterized in that** the fan (15) includes a fan wheel with a plurality of fan blades (16), and a fan disk (17) from which, on a side facing the front wall (13), the fan blades (16) protrude in such a manner that an air channel (21) is formed in order to pass the stream of air (11) to the outside in a radial plane (E).

3. The electric machine according to claim 1 or 2, **characterized in that** the axial opening (14) of the front wall (13) is arranged in a region near the axis.

4. The electric machine according to any one of claims 1 to 3, **characterized in that** free ends of the rim (19) delimit the cooling ribs (18) of the electronics housing (9) which are parallel to each other.

5. The electric machine according to any one of claims 1 to 4, **characterized in that** the rim (19) is integrally connected to the front wall (13) in order to form a bell-shaped A end plate (6).

6. The electric machine according to any one of claims 1 to 5, **characterized in that** the motor support (2) includes a B end plate (7) with at least one axial opening (10) which serves to let in air in order to form an axial stream of air (11) between the B end plate (7) and the A end plate (6).

7. The electric machine according to any one of claims 1 to 6, **characterized in that** the fan disk (17) is non-rotatably connected to a drive shaft (4), and that the fan disk (17) is designed as a solid part in order to generate a negative pressure for sucking in the stream of air (11).

8. The electric machine according to any one of claims 1 to 7, **characterized in that** the rim (19) has the shape of a circular ring and a radius such that an annular gap (20) is formed between the fan (15) and the rim (19) in order to pass the stream of air (11), in a circumferential direction, into an open region (22) of the rim (19), which region is filled by the cooling ribs (18).

9. The electric machine according to any one of claims 1 to 8, **characterized in that** a power converter arrangement is associated with the electric motor (101), which arrangement includes a rectifier unit (109), an intermediate circuit unit (111), an inverter unit (105) and a control electronics unit (106), wherein the inverter unit (105), the control electronics unit (106) and the electric motor (101) form a joint assembly (107) which is arranged spatially separated from a power supply unit (108) which includes the rectifier unit (109) and the intermediate circuit (111).

10. The electric machine according to any one of claims 1 to 9, **characterized in that** the design of the power supply unit (108) is adapted to the feeding conditions, and that the assembly (107) always has the same configuration, regardless of the feeding conditions.

11. The electric machine according to any one of claims 1 to 10, **characterized in that** the power supply unit (108) includes circuitry which is adapted to the mains voltage (U₁) and the mains frequency (f₁).

12. The electric machine according to any one of claims 1 to 11, **characterized in that** the power supply unit (108) is designed in such a manner that, at an output thereof, an intermediate circuit voltage (U_{ZK}) with a constant voltage level (U_{ZK}) can be generated, which voltage level is adapted to the design of the electric motor (101) and/or of the inverter unit (105).

13. The electric machine according to any one of claims 1 to 11, **characterized in that** the power supply unit (108) includes a filter unit (112) such that the requirements for electromagnetic compatibility are met in accordance with the feeding conditions.

14. The electric machine according to any one of claims 1 to 13, **characterized in that** the power supply unit (108) includes a converter unit (110) such that an intermediate circuit voltage (U_{ZK}) with a constant voltage level can be generated at the output of the power supply unit (108).

15. The electric machine according to any one of claims 1 to 14, **characterized in that** the power supply unit (108) is arranged at such a distance (A) from the assembly (107) and/or from a cooking chamber (104) of a steam cooking appliance that the operating temperature of the power supply unit (108) is below a predefined threshold.

16. The electric machine according to any one of claims 1 to 15, **characterized in that** the inverter unit (105) comprises an inverter which is adapted to the motor's nominal voltage (U₂) of the electric motor (1).

17. The electric drive according to any one of claims 1 to 16, **characterized in that** the electric motor (1) is designed as a three-phase synchronous motor.

18. The electric machine according to any one of claims 1 to 17, **characterized in that** the distance (A) between the power supply unit (108) and the assembly (107) is zero.

## Revendications

1. Machine électrique, en particulier moteur électrique (1), avec un support de moteur (2), avec un stator (3), avec un rotor (5) et avec un ventilateur (15), qui est disposé côté frontal, et avec un boîtier d'électronique (9), raccordé au support de moteur (2), dans lequel sont logés des composants électroniques, sachant qu'un flux d'air (11), qui est conduit, dans la direction axiale, à travers le support de moteur (2), pour refroidir le stator (3) et / ou le rotor (5), peut être aspiré par le ventilateur (15), une paroi frontale (13) du support de moteur (2), associée au ventilateur (15), étant dotée d'une ouverture axiale (14), par laquelle le flux d'air (11) sort du support de moteur (2) et est dévié, au moyen du ventilateur (15), en direction du boîtier d'électronique (9), **caractérisée en ce qu'**une couronne (19), qui entoure partiellement le ventilateur (15), se raccorde à la paroi frontale (13) du support de moteur (2), couronne au moyen de laquelle le flux d'air (11) est dévié au moins partiellement en direction de nervures de refroidissement (18) du boîtier d'électronique (9), qui sont aménagées sur un plan de projection (E) du ventilateur (15), sachant que la couronne (19) couvre, en forme de secteur annulaire, une zone d'angle obtus (α).

2. Machine électrique selon la revendication 1, **caractérisée en ce que** le ventilateur (15) présente une roue de ventilateur comprenant une pluralité de pales de ventilateur (16) et un disque de ventilateur (17) au-delà duquel les pales de ventilateur (16) font saillie, sur le côté dirigé vers la paroi frontale (13), de sorte que soit formé un canal d'air (21), qui est destiné à conduire le flux d'air (11) à l'extérieur, sur un plan radial (E).

3. Machine électrique selon revendication 1 ou 2, **caractérisée en ce que** l'ouverture axiale (14) de la paroi frontale (13) est située dans une région proche de l'axe.

4. Machine électrique selon l'une des revendications 1 à 3, **caractérisée en ce que** les extrémités libres de la couronne (19) limitent les nervures de refroidissement (18) du boîtier d'électronique (9) s'étendant parallèlement les unes par rapport aux autres.

5. Machine électrique selon l'une des revendications 1 à 4, **caractérisée en ce que** la couronne (19) est reliée d'une pièce à la paroi frontale (13) pour former un flasque A en forme de cloche (6).

6. Machine électrique selon revendication 1 à 5, **caractérisée en ce que** le support de moteur (2) présente un flasque B (7), avec au moins une ouverture axiale (10) d'entrée d'air, pour former un flux d'air (11) axial entre le flasque B (7) et le flasque A (6).

7. Machine électrique selon l'une des revendications 1 à 6, **caractérisée en ce que** le disque de ventilateur (17) est relié, solidaire en rotation, à un arbre d'entraînement (4) et que ledit disque de ventilateur (17) est de construction massive pour générer une pression négative, aspirant le flux d'air (11).

8. Machine électrique selon l'une des revendications 1 à 7, **caractérisée en ce que** la couronne (19) est réalisée en forme d'anneau de cercle doté d'un rayon tel que soit formé, entre le ventilateur (15) et la couronne (19), un soit conduit dans la direction périphérique, jusque dans une région ouverte (22) de la couronne (19), qui est remplie par les nervures de refroidissement (18).

9. Machine électrique selon l'une des revendications 1 à 8, **caractérisée en ce qu'**un agencement de convertisseur de courant doté d'une unité de redresseur (109), d'une unité de circuit intermédiaire (111), d'une unité d'onduleur (105) et d'une unité électronique de commande (106) est associé au moteur électrique (101), sachant que l'unité d'onduleur (105), l'unité électronique de commande (106) et le moteur électrique (101) forme en commun un composant, qui est installé en étant localement séparé d'une unité de fourniture de courant (108), qui est dotée de l'unité de redresseur (109) et de l'unité de circuit intermédiaire (111).

10. Machine électrique selon l'une des revendications 1 à 9, **caractérisée en ce que** l'unité de fourniture de courant (108) est de conception adaptée aux conditions d'alimentation et que le composant (107) présente toujours la même configuration indépendamment des conditions d'alimentation.

11. Machine électrique selon l'une des revendications 1 à 10, **caractérisée en ce que** l'unité de fourniture de courant (108) est dotée d'un circuit adapté à la tension de réseau (U₁) et à la fréquence de réseau (f₁).

12. Machine électrique selon l'une des revendications 1 à 11, **caractérisée en ce que** l'unité de fourniture de courant (108) est réalisée de sorte que puisse être générée, à une sortie de celle-ci, une tension de circuit intermédiaire (U_{zk}) avec un niveau de tension constant (U_{zk}), adapté à la conception du moteur électrique (101) et / ou de l'unité d'onduleur (105).

13. Machine électrique selon l'une des revendications 1 à 11, **caractérisée en ce que** l'unité de fourniture de courant (108) présente une unité de filtre (112) telle que les exigences posées à la compatibilité électromagnétique en fonction des conditions d'alimentation soient remplies.

14. Machine électrique selon l'une des revendications 1 à 13, **caractérisée en ce que** l'unité de fourniture de courant (108) présente une unité de convertisseur (110) de sorte qu'une tension de circuit intermédiaire (U_{zk}) avec un niveau de tension constant puisse être générée à la sortie de l'unité de fourniture de courant (108).

15. Machine électrique selon l'une des revendications 1 à 14, **caractérisée en ce que** l'unité de fourniture de courant (108) est disposée à un tel intervalle (A) du composant (107) et / ou d'une chambre de cuisson (104) d'un appareil de cuisson à vapeur que la température d'exploitation de l'unité de fourniture de courant (108) soit inférieure à une valeur de seuil prédéterminée.

16. Machine électrique selon revendication 1 à 15, **caractérisée en ce que** l'unité d'onduleur (105) comprend un onduleur, qui est configuré en fonction de la tension nominale (U₂) du moteur électrique (1).

17. Machine électrique selon l'une des revendications 1 à 16, **caractérisée en ce que** le moteur électrique (1) est réalisé en tant que moteur synchrone triphasé.

18. Machine électrique selon l'une des revendications 1 à 17, **caractérisée en ce que** l'intervalle (A) entre l'unité de fourniture de courant (108) et le composant (107) est nul.
